# EUROPÄISCHE PATENTSCHRIFT

(11) **EP 2 153 040 B1**
(45) Veröffentlichungstag und Bekanntmachung des Hinweises auf die Patenterteilung: **26.10.2011**
(21) Anmeldenummer: 08866468.5
(22) Anmeldetag: 10.11.2008
(51) Int. Cl.: B64D 41/00, F01N 13/18

(54) **VORRICHTUNG ZUM MECHANISCH ENTKOPPELTEN BEFESTIGEN EINER VON HEISSGAS DURCHSTRÖMTEN FLUGZEUGKOMPONENTE**
DEVICE FOR MECHANICALLY DECOUPLED ATTACHMENT OF AN AIRCRAFT COMPONENT HAVING HOT GAS FLOWING THROUGH THE SAME
DISPOSITIF DE FIXATION MECANIQUEMENT DECOUPLEE D'UN ELEMENT D'AVION TRAVERSE PAR UN GAZ CHAUD

(30) Priorität: 21.12.2007 DE 102007061995; 21.12.2007 US 15870
(43) Veröffentlichungstag der Anmeldung: 17.02.2010
(73) Patentinhaber: Airbus Operations GmbH, 21129 Hamburg (DE)
(72) Erfinder: PIESKER, Markus, 21339 Lüneburg (DE)
(74) Vertreter: Schicker, Silvia
(86) Internationale Anmeldenummer: PCT/EP2008/009462
(87) Internationale Veröffentlichungsnummer: WO 2009/083066

(56) Entgegenhaltungen:
- EP-A- 0 987 409
- WO-A-2006/034461
- DE-T2- 69 019 360
- DE-U1-202004 019 988
- US-A- 4 121 860
- US-A1- 2004 100 096

## Beschreibung

Die Erfindung betrifft eine Vorrichtung zum mechanisch entkoppelten Befestigen einer von Heißgas durchströmten Flugzeugkomponente an einem Gehäuse oder Rahmen. US 4 121 860, welches als nächstliegender, bekannter Stand der Technik betrachtet wird, zeigt eine solche Vorrichtung.

Heißgas entsteht in einem Flugzeug beispielsweise beim Betrieb eines Hilfsaggregats (im Folgenden auch "Auxiliary Power Unit" bzw. "APU" genannt), welches Heißgas in Form von Abgas mit einer Temperatur von bis zu 730°C erzeugt. Ein Abgas kühlendes und abführendes Abgassystem muss mechanisch mit der Struktur des Flugzeugs verbunden werden und gleichzeitig betriebsbedingte Relativbewegungen, Temperaturdehnungen, Fertigungs- und Montagetoleranzen ausgleichen können.

Üblicherweise werden Relativbewegungen oder Herstellungstoleranzen bei der Verwendung von Leitungen oder Kanälen zur Beförderung von Gasen bevorzugt durch Verwendung elastischer Gummi-Elemente kompensiert. Aufgrund der auftretenden hohen Temperaturen bei von Heißgas durchströmten Rohren ist der Einsatz von temperaturempfindlichem Gummi, wie beispielsweise einem Gummi-Faltenbalg, alleine nicht mehr möglich.

Ferner werden außerdem Faltenbalge aus Metall eingesetzt, die zwar temperaturbeständig sind, jedoch gewisse Mindestabmessungen erfordern, um vorgegebene Relativbewegungen ausgleichen zu können. Die Mindestabmessungen stehen im Gegensatz zu einem geforderten kompakten und effektiven Aufbau in einem Flugzeug, so dass Faltenbalge aus Metall für den gewünschten Anwendungsbereich nachteilig sind.

In einem Flugzeug werden - etwa beim Abführen von APU-Abgasen - häufig Vorrichtungen zum Lageausgleich verwendet, die mit einer Kolben-Kolbenring-Kombination verglichen werden können. Bei einer in der Heckspitze eines Flugzeugs angeordneten APU ist eine solche technische Lösung ausreichend zur Kompensation der statischen und dynamischen Maßabweichungen zwischen der APU als Heißgas erzeugendes System und dem Abgassystem. Hierbei sind die APU und das Abgassystem am selben Strukturabschnitt befestigt. Für den Fall, dass die APU und das Abgassystem nicht am selben Strukturabschnitt befestigt sind, müssen sowohl dynamische als auch statische Maßabweichungen berücksichtigt werden, die zwischen den beteiligten Strukturabschnitten entstehen. So ist beispielsweise bei dem Militärtransporter des Typs AIRBUS A400M das Abgassystem an der Verkleidung des Flügel-Rumpf-Übergangs ("Wing Fuselage Fairing") befestigt und sowohl die APU als auch ein dazugehöriges Brandschott am Rumpf. Die Maßabweichungen der verschiedenen Strukturabschnitte müssen damit zusätzlich zu den Maßabweichungen zwischen dem Heißgas erzeugenden System und dem Abgassystem berücksichtigt werden. Ein Kompensieren der sich addierenden Maßabweichungen zwischen der APU und dem Abgassystem sowie zusätzlich der Maßabweichungen zwischen den beiden Strukturabschnitten mittels der bewährten Kolben-Kolbenring-Kombination wäre nur mit einer entsprechend hohen Kolbenringhöhe zu realisieren. Damit verbunden würde eine entsprechend deutliche Erhöhung der Rückstellkräfte des Kolbenrings im eingebauten Zustand erfolgen, was zu erhöhter Reibung führt. Durch die größeren Relativbewegungen würden sich zusätzlich die Kräfte durch die Massenbeschleunigungen erhöhen. Die Bauteile zur Heißgasführung würden aufgrund der thermischen Beanspruchung durch das Heißgas die hohen Reibkräfte nicht aufnehmen können, wodurch Schäden entstehen können.

Die DE 690 19 360 T2 betrifft eine flexible Kupplungsvorrichtung für ein Abgas- bzw. Auspuffsammelleitungssystem eines Verbrennungsmotors, die dazu dient, einen ersten Sammelleitungsabschnitt mit einem zweiten Sammelleitungsabschnitt zu verbinden. An dem ersten Sammelleitungsabschnitt ist ein sich radial nach außen erstreckender Flansch ausgebildet, an dem mittels eines ersten Halterings ein erstes Ende eines flexiblen Faltenbalgs befestigt ist. Der zweite Sammelleitungsabschnitt weist an seinem dem ersten Sammelleitungsabschnitt zugewandten Ende ebenfalls einen radial nach außen ragenden Flansch auf, der eine ebene Befestigungsoberfläche bildet. Ein zweiter Haltering ist mit dem an dem zweiten Sammelleitungsabschnitt ausgebildeten Flansch verbunden und sichert ferner einen Führungsring sowie ein zweites Ende des flexiblen Faltenbalgs.

Die DE 20 2004 019 988 U1 offenbart ein Verbindungselement zur nicht starren Verbindung der Endbereiche zweier Rohrleitungen, das ein aus einem Montagerohrteil und einem Schutzrohrteil bestehendes Hitzeschutzelement zum Schutz eines Balgelements vor die Rohrleitungen durchströmenden heißen Gasen umfasst. Zwischen Endbereichen des Montagerohrteils und des Schutzrohrteils kann eine Biegefederanordnung vorgesehen sein.

Der Erfindung liegt die Aufgabe zugrunde, eine Vorrichtung zum mechanisch entkoppelten Befestigen einer von Heißgas durchströmten Flugzeugkomponente an einem Gehäuse oder Rahmen vorzuschlagen, die kompakt aufgebaut und dazu in der Lage ist, statische und dynamische Maßabweichungen zu kompensieren sowie den an sie gestellten thermischen Beanspruchungen standzuhalten.

Die Aufgabe wird durch eine Vorrichtung zum mechanisch entkoppelten Befestigen einer von Heißgas durchströmten Flugzeugkomponente an einem Gehäuse oder Rahmen gelöst, die die im Anspruch 1 genannten Merkmale umfasst.

Die erfindungsgemäße Vorrichtung ist in der Lage, die geschilderten Nachteile zu beheben. Sie reduziert oder unterbindet Spannungen infolge thermischer Expansion, Relativbewegungen der Anschlusskomponenten, betriebsbedingte Deformationen der Struktur und Vibrationen. Zusätzlich können mit der erfindungsgemäßen Vorrichtung Positions- und Geometrie-Abweichungen der Anschlusskomponenten kompensiert werden.

Durch Verwendung eines Faltenbalgs kann wirkungsvoll ein Winkelversatz und ein axialer Lageversatz der am Gehäuse angebrachten Vorrichtung und einer Heißgasquelle ausgeglichen werden. Bei einer vorteilhaften Weiterbildung der erfindungsgemäßen Vorrichtung kann eine dichtende Verbindung mit einem Brandschott hergestellt werden, bei gleichzeitiger Kompensationsmöglichkeit von Lage- und Winkelversätzen. Die Kombination mit einem hohlkegelförmigen Abschirmelement ist ferner ebenso vorteilhaft, da der Faltenbalg durch die vom Heißgas ausgehende Wärme geschützt wird. Zusätzlich können statische radiale Lageabweichungen in einer Weiterbildung der Vorrichtung durch eine variabel anbringbare kraftschlüssige Verbindung eines am Kopplungsbauteil angebrachten Kragens bereits bei der Montage ausgeglichen werden.

Die erfindungsgemäße Vorrichtung weist eine Reihe von Vorteilen gegenüber bekannten Vorrichtungen aus dem Stand der Technik auf. Die erfindungsgemäße Vorrichtung verhindert oder reduziert zum einen Verspannungen im Gehäuse, den von Heißgas durchströmten Rohren, einem Brandschott und anderen in unmittelbarer Nähe angeordneten Bauteilen sowohl bei der Montage als auch im Flugbetrieb. Weiterhin kompensiert die erfindungsgemäße Vorrichtung statische und dynamische Maßabweichungen zwischen den beteiligten Komponenten und bei Verwendung für ein Abgassystem thermische Ausdehnungen zwischen Abgassystem, einem Brandschott und der umgebenden Struktur entsprechend der EASA-Vorschrift CS 25A1123. Die erfindungsgemäße Vorrichtung erlaubt zusätzlich das dichte Führen eines Abgaskanals durch ein Brandschott, so dass der Abgaskanal unter allen Betriebsbedingungen und im Feuerfall die ISO-Norm 2685 erfüllt.

Durch die mechanische Entkoppelung werden Vibrationen zwischen einem Abgassystem und einem Brandschott reduziert oder unterbunden. Durch eine kraftschlüssige Verbindung des Kopplungsbauteils zwischen Flansch und Gegenhalterblech durch eine Schraubverbindung wird eine gleich bleibende Verbindungsqualität bei sehr flexibler radialer Einstellmöglichkeit ermöglicht. Schließlich weist die erfindungsgemäße Vorrichtung einen sehr geringen Bauraumbedarf und ein niedriges Gewicht auf.

Die Erfindung wird nachfolgend anhand der Figuren näher erläutert. In den Figuren werden gleiche Objekte durch gleiche Bezugszeichen gekennzeichnet. Es zeigen:
- Figur 1: Draufsicht auf die erfindungsgemäße Vorrichtung,
- Figur 2: seitliche Schnittansicht eines Abgassystems mit der erfindungsgemäßen Vorrichtung und
- Figur 3: seitliche Schnittansicht der erfindungsgemäßen Vorrichtung.

Zum besseren Verständnis wird nachfolgend ein Ausführungsbeispiel der erfindungsgemäßen Vorrichtung beschrieben, die exemplarisch in ein Militärtransportflugzeug vom Typ AIRBUS A400M integriert ist. Die erfindungsgemäße Vorrichtung ist nicht auf die mechanische Entkopplung von APU-Abgasrohren beschränkt, sondern kann auch in anderen Flugzeugsystemen verwendet werden, in denen ein Heißgas durch ein Rohr abgeführt werden soll.

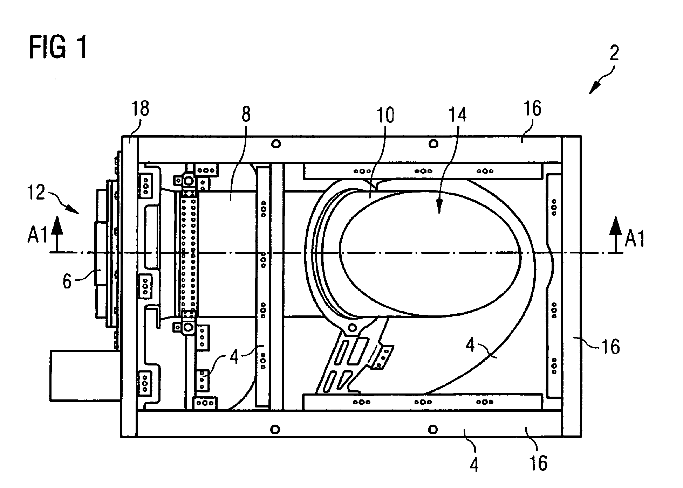

Fig. 1 zeigt ein Abgassystem 2, bei dem eine während des Betriebs angebrachte Gehäuseabdeckung zur besseren Darstellung demontiert ist. Das Abgassystem 2 umfasst ein aus einer Blechwanne, Verstärkungsbauteilen, Haltern und Beschlägen gebildetes Gehäuse 4 und einen exemplarisch aus drei aufeinander folgenden Abgasrohren 6, 8 und 10 bestehenden Abgaskanal, welcher sich von einer Abgaseintrittsstelle 12 ausgehend in das Gehäuse 4 erstreckt. Das Abgasrohr 6 leitet das Abgas einer APU von der Abgaseintrittsstelle bzw. Schnittstelle 12 in das Abgassystem 2 ein, wo es in das Abgasrohr 8 gelangt und von dort über das an einer Abgasaustrittstelle 14 gelegene Abgasrohr 10 schließlich in die Umgebung geleitet wird. Das Gehäuse 4 wird über Gehäuseschnittstellen 16 und 18 am Einbauort befestigt, über die die Lasten des Abgassystems abgeführt werden. Beispielsweise stellt bei dem Flugzeug des Typs A400M die Schnittstelle 16 die Verkleidung des Flügel-Rumpf-Übergangs ("Wing Fuselage Fairing") und die Schnittstelle 18 das Brandschott dar.

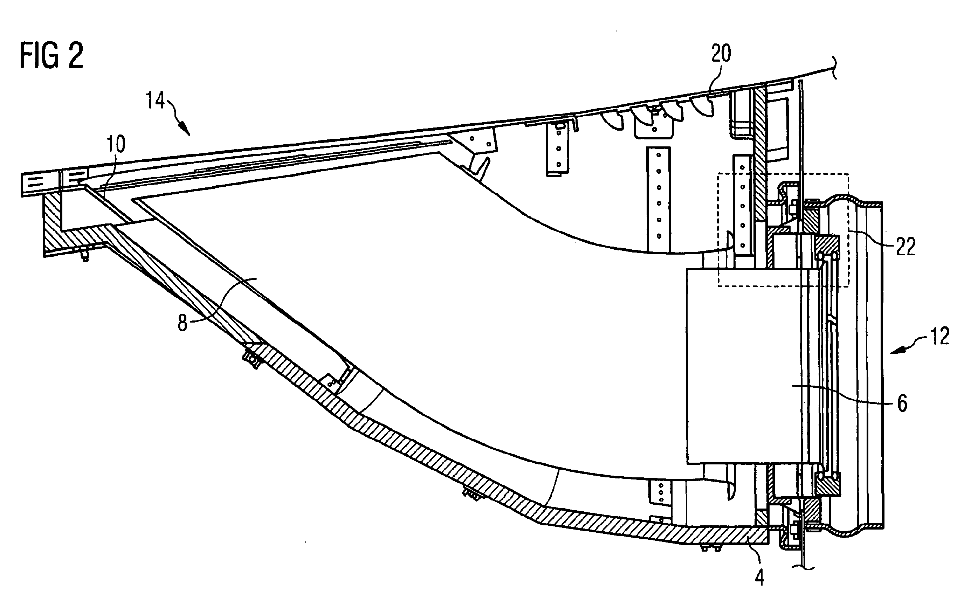

In Fig. 2 wird im Schnitt das Abgassystem 2 mit der integrierten erfindungsgemäßen Vorrichtung dargestellt. Der durch die drei Abgasrohre 6, 8 und 10 aufgebaute Abgaskanal wird von der Abgaseintrittsstelle bzw. Schnittstelle 12 mit Abgas einer APU durchströmt. Das Abgasrohr 8 ist in dem Gehäuse 4 durch Schrauben befestigt, das Abgasrohr 10 ist exemplarisch in einer Gehäuseabdeckung 20 verschweißt. Das Abgasrohr 6 ist durch die erfindungsgemäße Vorrichtung 22 zum mechanischen Entkoppeln in dem Gehäuse 4 befestigt, um Relativbewegungen und thermische Ausdehnungseffekte kompensieren zu können und gleichermaßen unter allen Betriebsbedingungen eine dichte Verbindung der Abgaseintrittsstelle bzw. Schnittstelle 12 des Abgasrohrs 6 mit der APU zu gewährleisten.

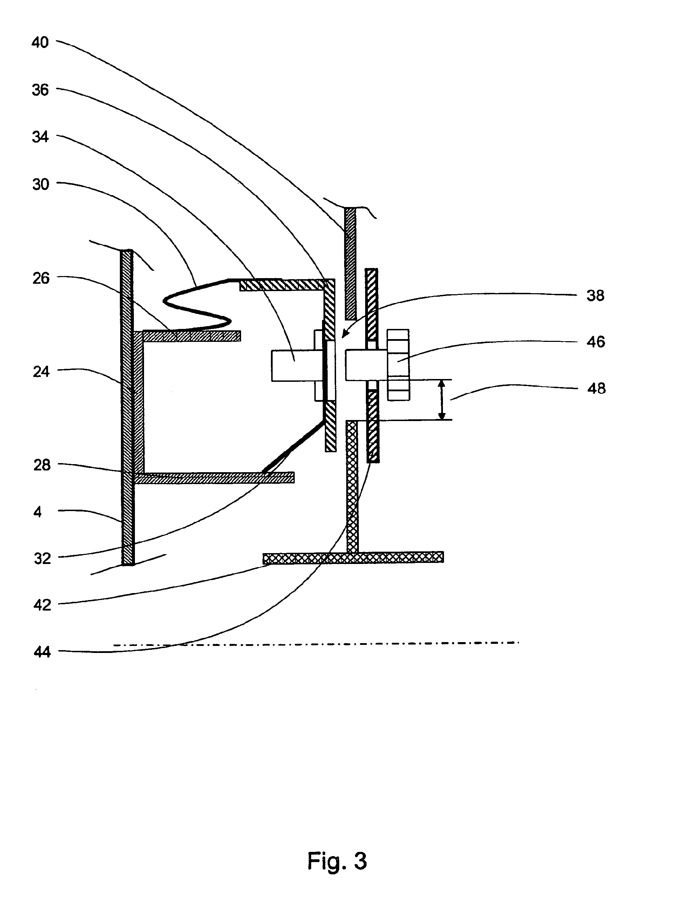

Fig. 3 zeigt die erfindungsgemäße Vorrichtung 22 detaillierter anhand eines vergrößerten, in Fig. 2 durch gestrichelte Linien gekennzeichneten Ausschnitts. Es sei hierbei angemerkt, dass die vorgestellten Bauteile vorzugsweise rotationssymmetrisch ausgeführt sind und zentrisch zur strichpunktierten Linie in Fig. 3 angeordnet sind, mit einer gesondert aufgeführten Ausnahme.

Ein vorzugsweise aus Blech gefertigter ringförmiger Halter 24 ist durch eine Nietverbindung, Schweißverbindung oder beliebige andere Fügeverfahren am Gehäuse 4 angeordnet. Der Halter 24 weist einen im Wesentlichen U-förmigen Profilquerschnitt mit einem äußeren Gurt 26 und einem inneren Gurt 28 auf. Auf dem äußeren Gurt 26 des Halters 24 wird ein Faltenbalg 30 befestigt, beispielsweise durch eine nicht näher dargestellte Schelle. Ein ebenfalls vorzugsweise aus Blech gefertigtes kegelförmiges Abschirmelement 32 ist zusammen mit mehreren am Umfang angeordneten Annietmuttern 34 an einen rotationssymmetrischen Flansch 36 aus Blech mit abgewinkeltem Profilquerschnitt genietet oder geschweißt.

Die aus den Komponenten Flansch 36, Abschirmelement 32 und Annietmuttern 34 gebildete Flanschbaugruppe 38 verbindet das Gehäuse 4 und ein rotationssymmetrisch ausgeschnittenes Brandschott 40 miteinander und bildet einen Teil der Befestigung eines zylinderförmig ausgeführten Kopplungsbauteils 42. Bei der Montage wird die Flanschbaugruppe 38 mit dem Abschirmelement 32 über den inneren Gurt 28 des Halters 24 geschoben und anschließend der Faltenbalg 30 mittels einer Schelle an der Flanschbaugruppe 38 befestigt, wodurch ebenso die Flanschbaugruppe 38 durch den Faltenbalg 30 am Gehäuse 4 befestigt wird.

Die Flanschbaugruppe 38 wird durch das Abschirmelement 32 auf dem Halter 24 axial geführt. Dadurch ist die Flanschbaugruppe 38 axial beweglich und kann in jede Richtung geneigt werden. Das Abschirmelement 32 dient dazu, das Abgas der APU zurückzuhalten, um den Faltenbalg 30 vor Wärme zu schützen. Das Gehäuse 4 wird in die Verkleidung des Flügel-Rumpf-Übergangs eingesetzt und an den Schnittstellen 16 und 18 befestigt, so dass es ortsfest positioniert ist, die Flanschbaugruppe 38 jedoch zunächst lose an der Außenseite des Brandschotts 40 anliegt. Das Brandschott 40 besteht im Bereich des Abgassystems aus einer feuerfesten Wand, die mit vernieteten Stringern verstärkt ist. Das Brandschott 40 ist im Bereich der Durchführung der Abgaseintrittsstelle bzw. Schnittstelle 12 zum Anschließen an die APU kreisförmig ausgespart. Von der Innenseite des Brandschotts 40 wird das Kopplungsbauteil 42 eingesetzt und zusammen mit der Flanschbaugruppe 38, einem Gegenhalterblech 44 und dem Brandschott 40 über die Annietmuttern 34 mittels radial über das Gegenhalterblech 44 verteilter Schrauben 46 verschraubt. Die radiale Position des Kopplungsbauteils 42 ergibt sich, wenn die Abgaseintrittsstelle bzw. Schnittstelle 12 der Abgas abführenden Komponente zentrisch zur Schnittstelle des Abgas erzeugenden Systems (z. B.) APU ausgerichtet ist.

Durch die gezeigte Anordnung können verschiedene technische Eigenschaften realisiert werden. Zunächst werden axiale statische und dynamische Maßabweichungen zwischen Brandschott 40 und dem Abgassystem 2 durch eine Verschiebung des Abschirmelement 32 auf dem unteren Gurt 28 des Halters 24 kompensiert. Abweichungen in der Winkligkeit zwischen Gehäuse 4 und Brandschott 40 lassen sich dadurch kompensieren, dass die Flanschbaugruppe 38 in alle Richtungen beliebig geneigt werden kann. So könnte etwa ein schräg stehendes Brandschott 40 oder ein schräg liegendes Abgassystem 2 durch eine entsprechende Neigung der Flanschbaugruppe 38 ausgeglichen werden.

Generell werden auf diese Weise statische und dynamische Maßabweichungen so kompensiert, dass es nicht zu Verspannungen zwischen einzelnen Bauteilen und Komponenten kommt und sowohl die Flanschbaugruppe 38 als auch das Gegenhalterblech 44 immer parallel zu den jeweiligen Dichtflächen anliegen.

Statische radiale Maßabweichungen an der Abgaseintrittsstelle bzw. Schnittstelle 12 zwischen dem Abgassystem 2 und der APU lassen sich leicht durch entsprechendes Einstellen des Kopplungsbauteils 42 kompensieren. Hierbei wird das radial veränderlich positionierbare Kopplungsbauteil 42 radial in eine gewünschte Position geschoben (s. Bezugszeichen 48). Durch Eindrehen und Festziehen der Schrauben 46 wird das Kopplungsbauteil 42 in der entsprechenden Position fixiert und befestigt.

Dynamische radiale Maßabweichungen können über den Halter 24 und das Abschirmelement 32 federnd abgefangen werden. Die zu kompensierenden Maßabweichungen lassen sich durch Verlängern des inneren Gurtes 28 des Halters 24 und/oder des Abschirmelements 32 vergrößern. Des Weiteren wirken sich zusätzliche Schlitze im Abschirmelement 32 und/oder im unteren Gurt 28 des Halters 24 ebenfalls positiv auf die Höhe der radial zu kompensierenden Maßabweichungen aus. Um eine Feuersicherheit der Verbindung zwischen dem Halter 24 und dem Abschirmelement 32 nach ISO2685 zu gewährleisten, sind solche Schlitze zu verdecken. Hierbei werden zwei geschlitzte kegelförmige Abschirmelemente 32 aus dünnem Blech übereinander zu legen und vorzugsweise mittels eines Punktschweißverfahrens zu verbinden sein. Es ist hierbei darauf zu achten, dass die Schlitze beider Abschirmelemente 32 leicht versetzt angeordnet werden, so dass die Schlitze verdeckt werden und Dichtheit gewährleisten. Mit der gleichen Methode lässt sich ein geschlitzter unterer Gurt 28 des Halters 24 abdichten.

Die erfindungsgemäße Vorrichtung ermöglicht eine besonders effektiv mechanisch entkoppelte Halterung von Heißgas durchströmten Komponenten in einem Flugzeug, um thermische Spannungen möglichst zu eliminieren und Lageversätze zwischen den Rohren und Heißgasquellen auszugleichen. Die gezeigte technische Ausführung ist lediglich als Ausführungsbeispiel zu verstehen, das nur zur Verdeutlichung der erfindungsgemäßen technischen Merkmale und nicht als Beschränkung des Schutzbereichs zu verstehen ist.

## Patentansprüche

1. Vorrichtung (22) zum mechanisch entkoppelten Befestigen einer von Heißgas durchströmten Flugzeugkomponente an einem Gehäuse oder Rahmen (4), welche umfasst:
- ein mit der von Heißgas durchströmten Flugzeugkomponente verbindbares Kopplungsbauteil (42),
- einen mit dem Gehäuse oder Rahmen (4) verbindbaren Halter (24), an dem ein erstes Ende eines Faltenbalgs (30) befestigt ist, und
- einen Flansch (36), wobei an dem Flansch (36) ein zweites Ende des Faltenbalgs (30) und das Kopplungsbauteil (42) befestigt sind, so dass das Kopplungsbauteil (42) über den Flansch (36) und den Faltenbalg (30) mit dem Halter (24) verbunden ist **dadurch gekennzeichnet, dass** an dem Flansch (36) ferner ein Abschirmelement (32) zum thermischen Abschirmen des Faltenbalgs (30) vor hoher Temperaturbelastung befestigt ist.

2. Vorrichtung nach Anspruch 1,
bei der das Kopplungsbauteil (42) eine im Wesentlichen zylindrische Form zur Verbindung mit einer von Heißgas durchströmten Flugzeugkomponente in Form eines Abgasrohrs (6) aufweist.

3. Vorrichtung nach Anspruch 1 oder 2,
bei der der Halter (24) im Wesentlichen ringförmig ausgeführt ist.

4. Vorrichtung nach einem der vorhergehenden Ansprüche,
bei der das Abschirmelemente (32) zum Abschirmen des Faltenbalgs (30) vor hoher Temperaturbelastung hohlkegelförmig ausgebildet und koaxial an dem Flansch (36) befestigt ist.

5. Vorrichtung nach einem der vorhergehenden Ansprüche,
bei der das Abschirmelement (32) Schlitze aufweist.

6. Vorrichtung nach einem der vorhergehenden Ansprüche,
die zwei oder mehr hohlkegelförmige und zueinander versetzte Schlitze aufweisende Abschirmelemente (32) aufweist, die übereinander angeordnet und miteinander verbunden sind.

7. Vorrichtung nach einem der vorhergehenden Ansprüche,
bei der das Kopplungsbauteil (42) an einem äußeren Umfang einen kragenartigen Fortsatz aufweist, so dass der Profilquerschnitt des Kopplungsbauteils (42) im Wesentlichen T-förmig ist.

8. Vorrichtung nach Anspruch 7,
bei der der kragenförmige Fortsatz durch eine kraftschlüssige Verbindung am Flansch (36) befestigt ist.

9. Vorrichtung nach Anspruch 8,
bei der der kragenförmige Fortsatz radial versetzbar zwischen dem Flansch (36) und einem Gegenhalterblech (44) eingeklemmt ist.

10. Vorrichtung nach Anspruch 9,
bei der das Gegenhalterblech (44) durch radial über das Gegenhalterblech (44) verteilte und in korrespondierende Annietmuttern (34) eingedrehte Schrauben (46) am Flansch (36) befestigt ist.

11. Vorrichtung nach einem der vorhergehenden Ansprüche,
bei der der Flansch (36) abdichtend an einem eine Durchgangsöffnung aufweisenden und im Wesentlichen scheibenförmigen Brandschott (40) anliegt.

12. Vorrichtung nach Anspruch 11,
bei der das Brandschott (40) zwischen dem Flansch (36) und dem Gegenhalterblech (44) angeordnet ist.

13. Vorrichtung nach einem der vorhergehenden Ansprüche,
bei der das Abschirmelement (32) zum Ausgleichen eines Winkelversatzes und/oder eines radialen oder axialen Lageversatzes federnd auf einem im Wesentlichen axialen Gurt (28) des Halters (24) axial verschiebbar aufliegt.

14. Vorrichtung nach einem der vorhergehenden Ansprüche,
bei der das erste Ende des Faltenbalgs (30) auf einem oberen Gurt (26) des Halters (24) angebracht ist.

## Claims

1. Device (22) for mechanically decoupled fastening of an aircraft component perfused by hot gas to a housing or frame (4), which comprises:
- a coupling member (42) which is connectable to the aircraft component perfused by hot gas,
- a holder (24) which is connectable to the housing or frame (4), to which a first end of a bellows (30) is fastened, and
- a flange (36), a second end of the bellows (30) and the coupling member (42) being fastened to the flange (36), so that the coupling member (42) is connected to the holder (24) via the flange (36) and the bellows (30),
**characterized in that** a shielding element (32) for thermal shielding of the bellows (30) from high thermal load being fastened to the flange (36).

2. Device according to Claim 1,
wherein the coupling member (42) has a substantially cylindrical shape for connection to an aircraft component perfused by hot gas, in the form of a waste-gas pipe (6).

3. Device according to Claim 1 or 2,
wherein the holder (24) is substantially of annular construction.

4. Device according to one of the preceding claims,
wherein the shielding element (32) for shielding the bellows (30) from high thermal load is of hollow conical construction and fastened coaxially to the flange (36).

5. Device according to one of the preceding claims,
wherein the shielding element (32) comprises slots.

6. Device according to one of the preceding claims,
which exhibits two or more hollow conical shielding elements (32) comprising mutually offset slots, which are arranged above one another and connected to one another.

7. Device according to one of the preceding claims,
wherein the coupling member (42) comprises a collar-like extension on an outer periphery, so that the profile cross-section of the coupling member (42) is substantially T-shaped.

8. Device according to Claim 7,
wherein the collar-shaped extension is fastened to the flange (36) in a force-fitting manner.

9. Device according to Claim 8,
wherein the collar-shaped extension is clamped so as to be capable of being radially offset between the flange (36) and a brace plate (44).

10. Device according to Claim 9,
wherein the brace plate (44) is fastened to the flange (36) by screws (46) which are distributed radially over the brace plate (44) and screwed into corresponding riveting nuts (34).

11. Device according to one of the preceding claims,
wherein the flange (36) bears in sealing manner against a firewall (40) which comprises a passage opening and which is substantially disc-shaped.

12. Device according to Claim 11,
wherein the firewall (40) is arranged between the flange (36) and the brace plate (44).

13. Device according to one of the preceding claims,
wherein the shielding element (32) for equalising an angular misalignment and/or a radial or axial positional misalignment rests resiliently in axially displaceable manner on a substantially axial belt (28) of the holder (24).

14. Device according to one of the preceding claims,
wherein the first end of the bellows (30) is fitted to an upper belt (26) of the holder (24).

## Revendications

1. Dispositif (22) pour la fixation mécaniquement découplée d'un composant d'avion traversé par un écoulement de gaz chaud, sur un carter ou un châssis (4), le dispositif comprenant :
- une pièce de couplage (42) pouvant être reliée au composant d'avion traversé par l'écoulement de gaz chaud,
- un support (24) pouvant être relié au carter ou au châssis (4) et sur lequel est fixée une première extrémité d'un soufflet (30), et
- une bride (36), une deuxième extrémité du soufflet (30) et la pièce de couplage (42) étant fixées sur la bride (36), de sorte que la pièce de couplage (42) est reliée au support (24) par l'intermédiaire de la bride (36) et du soufflet (30),
**caractérisé en ce qu'**un élément formant bouclier de protection (32) est en outre fixé sur la bride (36), pour assurer une protection thermique du soufflet (30) à l'encontre d'une forte sollicitation en température.

2. Dispositif selon la revendication 1,
dans lequel la pièce de couplage (42) présente une forme sensiblement cylindrique pour être reliée à un composant d'avion traversé par un écoulement de gaz chaud et se présentant sous la forme d'une conduite de gaz d'échappement (6).

3. Dispositif selon la revendication 1 ou la revendication 2,
dans lequel le support (24) est réalisé selon une forme sensiblement annulaire.

4. Dispositif selon l'une des revendications précédentes,
dans lequel l'élément formant bouclier de protection (32) pour assurer la protection du soufflet (30) à l'encontre d'une forte sollicitation en température, est réalisé selon une forme conique creuse et est fixé de manière coaxiale sur la bride (36).

5. Dispositif selon l'une des revendications précédentes,
dans lequel l'élément formant bouclier de protection (32) présente des fentes.

6. Dispositif selon l'une des revendications précédentes,
comprenant deux ou plusieurs éléments formant bouclier de protection (32) de forme conique creuse et présentent des fentes décalées les une par rapport aux autres, qui sont agencés de manière superposée et sont reliés l'un à l'autre.

7. Dispositif selon l'une des revendications précédentes,
dans lequel la pièce de couplage (42) présente sur une périphérie extérieure, un prolongement en forme de collerette, de sorte que la section de profil de la pièce de couplage (42) est sensiblement d'une forme en T.

8. Dispositif selon la revendication 7,
dans lequel le prolongement en forme de collerette est fixé sur la bride (36) par une liaison par adhérence.

9. Dispositif selon la revendication 8,
dans lequel le prolongement en forme de collerette est enserré de manière radialement déplaçable entre la bride (36) et une tôle de support conjuguée (44).

10. Dispositif selon la revendication 9,
dans lequel la tôle de support conjuguée (44) est fixée à la bride (36) par des vis (46) réparties radialement sur la tôle de support conjuguée (44) et vissées dans des écrous prisonniers par rivetage (34) correspondants.

11. Dispositif selon l'une des revendications précédentes,
dans lequel la bride (36) s'applique de manière étanche contre une cloison coupe-feu (40) présentant une ouverture de passage et ayant sensiblement une forme de disque.

12. Dispositif selon la revendication 11,
dans lequel la cloison coupe-feu (40) est agencée entre la bride (36) et la tôle de support conjuguée (44).

13. Dispositif selon l'une des revendications précédentes,
dans lequel l'élément formant bouclier de protection (32), pour la compensation d'un décalage angulaire et/ou d'un décalage de position radial ou axial, s'applique élastiquement, de manière axialement coulissante, sur une aile (28) sensiblement axiale du support (24).

14. Dispositif selon l'une des revendications précédentes,
dans lequel la première extrémité du soufflet (30) est montée sur une aile supérieure (26) du support (24).
